(19) Europäisches Patentamt
European Patent Office
Office européen des brevets

(11) **EP 2 210 700 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(51) Int Cl.:
*B23Q 1/70* *(2006.01)*      *B23Q 17/00* *(2006.01)*

(21) Anmeldenummer: **09179089.9**

(22) Anmeldetag: **14.12.2009**

(54) **Radarvorrichtung zur Überwachung der Lage eines Werkzeugs oder Maschinenelementes**

Radar device for monitoring the location of a tool or machine element

Dispositif radar de surveillance de la position d'un objet ou d'un élément de machine

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.01.2009 DE 102009005745**

(43) Veröffentlichungstag der Anmeldung:
**28.07.2010 Patentblatt 2010/30**

(73) Patentinhaber: **Ott-Jakob Spanntechnik GmbH 87663 Lengenwang (DE)**

(72) Erfinder:
• **Bonerz, Stefan 87616 Marktoberdorf (DE)**

• **Greif, Josef 87654, Friesenried (DE)**
• **Bechteler, Wolfgang 87640, Ebenhofen (DE)**

(74) Vertreter: **Schwarz, Thomas Charrier Rapp & Liebau Patentanwälte Fuggerstrasse 20 86150 Augsburg (DE)**

(56) Entgegenhaltungen:
**DE-A1- 4 201 013      DE-A1- 19 903 183
DE-A1- 19 959 778      DE-A1-102005 033 096
DE-A1-102007 052 940**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Überwachung der Lage eines Werkzeugs oder Maschinenelementes nach dem Oberbegriff des Anspruchs 1.

Bei Werkzeugmaschinen kann durch Verschmutzungen an den Werkzeugauflageflächen eine suboptimale Werkzeugspannung hervorgerufen werden. Verschmutzungen können insbesondere aus Materialspänen bestehen, die bei der Bearbeitung eines Werkstücks zwangsläufig anfallen. Folglich kann es aufgrund einer Schiefstellung bzw. eines Achsversatzes des Werkzeugs zu einer mangelhaften Bearbeitung kommen. Dieser Effekt wird noch verstärkt durch den Einsatz von langen Werkzeugen. Zur Verbesserung der Fertigungsqualität und Reduktion des Ausschussanteils ist es wünschenswert, das Auftreten einer fehlerhaften Werkzeugspannung bereits vor Beginn der Bearbeitung erkennen zu können. Daher wurde bereits vorgeschlagen, bei Werkzeugmaschinen die Qualität der Werkzeugspannung durch eine Überwachung der Plananlage des Werkzeugs zu überprüfen.

Darüber hinaus besteht bei Werkzeugmaschinen das Bedürfnis, die Positionen verschiedener Maschinenelemente zu überwachen. Ein Beispiel hierfür ist der Antrieb zur Betätigung der Werkzeugspannvorrichtung. Eine Positionsmessung an einem Element dieses Antriebs ist dazu geeignet, Aufschluss darüber zu geben, ob Stellbefehle der Maschinensteuerung zum Lösen bzw. Spannen eines Werkzeugs korrekt zur Ausführung gelangen oder nicht.

Die DE 103 51 347 A1 beschreibt die Überwachung der an der Spannvorrichtung einer Werkzeugmaschine auftretenden Kräfte mittels druck-, spannungs- oder kraftsensibler Sensorik. Das hier verfolgte Ziel liegt in der gleichzeitigen Überwachung der korrekten Werkzeugspannung und der während der Bearbeitung auftretenden Kräfte, um Prozessparameter bei der Bearbeitung optimieren zu können. Hierzu müssen die Sensoren so in die Spannvorrichtung integriert sein, dass sie in den dort während der Bearbeitung auftretenden Kraftfluss einbezogen sind.

Die DE 199 59 778 A1 lehrt die Verwendung eines Telemetriesystems mit abstandsmessender Sensorik zur gleichzeitigen Kontrolle des Spannzustandes und der Plananlage der Werkzeugaufnahme an der Spindel. Über die Ausgestaltung der Sensorik und der Telemetrieeinheit enthält die Schrift jedoch keine näheren Angaben.

Die DE 199 03 183 A1 beschreibt eine Hochfrequenz-Abstandsmesseinrichtung mit einer als Sensor ausgebildeten Antenne und einem einseitig offenen Hohlleiter, dessen offene Seite mit einem Dämpfungsglied abgeschlossen ist. Ein reflektierendes Objekt, dessen Position bestimmt werden soll, befindet sich nahe dem Dämpfungsglied. Die Sendefrequenz des Oszillators wird so geregelt, dass sich die Anordnung in Resonanz befindet. Die Resonanzfrequenz ist ein Maß für den Abstand des reflektierenden Objektes von dem Dämpfungsglied. Es werden verschiedene Anwendungen vorgeschlagen, bei denen der Abstandssensor stets im Inneren einer mechanischen Vorrichtung, in der eine Abstandsmessung an einer ihrer Komponenten erfolgen soll, eingebaut ist.

Die Aufgabe der Erfindung ist es, zur Überwachung der Lage eines Werkzeugs oder Maschinenelementes an oder in einer Arbeitsspindel oder Werkzeugspannvorrichtung, insbesondere in einer Bearbeitungsmaschine, eine neue und zweckmäßige Lösung zu schaffen, die einfach und kostengünstig realisierbar ist.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Die Erfindung sicht eine Erfassung der Lage des interessierenden Werkzeugs oder Maschinenelementes mittels Einstrahlung elektromagnetischer Wellen in mindestens einen in der Arbeitsspindel oder Werkzeugspannvorrichtung angebrachten Kanal und Auswertung des aus diesem Kanal reflektierten Signals vor. Die Beeinflussung der Reflexionscharakteristik durch die Lage des Werkzeugs oder Maschinenelementes ergibt sich daraus, dass der Kanal einen Wellenausbreitungspfad von einer äußeren Oberfläche der Arbeitsspindel oder Werkzeugspannvorrichtung zu dem interessierenden Werkzeug oder Maschinenelement definiert, so dass zumindest in einer möglichen Position desselben ein Teil seiner Oberfläche als Reflexionsoberfläche wirkt. Der Abstand dieser Reflexionsoberfläche von der Sendeantenne ist nach dem Radarprinzip messbar.

Die Erfindung ermöglicht im Vergleich zu Transpondersystemen bekannter Art den völligen Verzicht auf die Anordnung elektronischer Schaltungskomponenten in einer rotierenden Arbeitsspindel bzw. im Inneren einer Werkzeugspannvorrichtung, wo zu diesem Zweck kaum Platz zur Verfügung steht und die Zugangsmöglichkeiten stark eingeschränkt sind. Die einzige Modifikation, die zur Verwirklichung der Erfindung an der Arbeitsspindel oder Werkzeugspannvorrichtung zwingend vorgenommen werden muss, ist die Anbringung mindestens einer Bohrung zur Schaffung eines für die eingestrahlten und reflektierten elektromagnetischen Wellen als Hohlleiter wirkenden Kanals.

Ein weiterer Vorteils besteht darin, dass Komponenten für Radarsysteme zur Abstandsmessung (24 GHz, 60-61 GHz, 76-77 GHz) aus dem Automobilbereich kostengünstig kommerziell verfügbar sind. Dies ermöglicht es, auf bewährte fertige Komponenten als Bausteine des Gesamtsystems zurückzugreifen und verringert den Entwicklungsaufwand.

Zur Kontrolle der Plananlage eines Werkzeugs oder Werkzeugträgers an einer Arbeitsspindel, einer besonders wichtigen Ausfiihrungsfonn der Erfindung, wird eine Vielzahl von Kanälen benötigt, die jeweils an einer Fläche enden, an welcher sich die Arbeitsspindel im Betrieb normalerweise mit dem Werkzeug oder Werkzeugträger in Kontakt befindet, so dass eine Abweichung des Werkzeugs oder Werkzeugträgers von seiner korrekten Lage eine Verschiebung und/oder Kippung der Reflexionsflächen zur Folge hat. Die Signalverarbeitung vereinfacht sich in diesem Fall dadurch, dass keine Absolutwertmessung der Position des Werkzeugs oder Werkzeugträgers nötig ist, sondern für die Erkennung der Korrektheit der Position eine Prüfung der Reflexionscharakteristiken der verschiedenen Kanäle auf Übereinstimmung ausreicht.

Äußerst zweckmäßig ist eine Füllung des Kanals bzw. der Kanäle mit einem Dielektrikum, um eine Beeinträchtigung der ausgeübten Hohlleiterfunktion durch das Eindringen von Schmutz und Spänen zu verhindern. Die einzige Art von Schadensfall, der in diesem Fall am rotierenden Teil der Sensorik noch auftreten kann, ist das Einpressen eines Spans in das Dielektrikum. Die Reparatur eines solchen Schadens ist jedoch im Vergleich zu einer Reparatur an einer in die Arbeitsspindel integrierten elektronischen Sensorschaltung einfacher und kostengünstiger. Im Fall eine Positionsmessung an hydraulischen oder pneumatischen Maschinenelementen kann eine solche Füllung sogar unerlässlich sein, wenn sich das interessierende Element in einem Raum befindet, in dem zumindest zeitweise ein Überdruck herrscht.

Nachfolgend werden Ausführungsbeispiele der Erfindung unter Bezugnahme auf die Zeichnungen beschrieben. In diesen zeigt

Fig. 1      eine Vorderansicht einer Arbeitsspindel,

Fig. 2      eine schematische Teillängsschnittansicht einer fehlerhaften Werkzeugspannung,

Fig. 3      eine Längsschnittansicht einer ersten Ausführungsform der Erfindung,

Fig. 4      eine Längsschnittansicht einer zweiten Ausführungsform der Erfindung,

Fig. 5      ein elektrisches Blockschaltbild einer ersten erfindungsgemäßen Auswerteschaltung,

Fig. 6      eine vergrößerte Längsschnittansicht eines Ausschnitts aus einer dritten Ausführungsform der Erfindung,

Fig.7      ein elektrisches Blockschaltbild einer zweiten erfindungsgemäßen Auswerteschaltung und

Fig. 8      eine Längsschnittansicht einer vierten Ausführungsform der Erfindung.

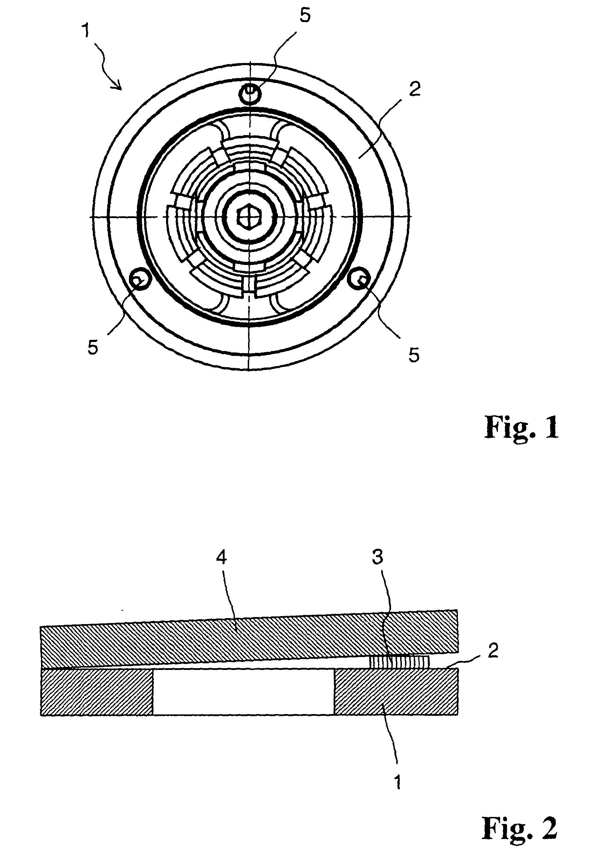

Fig. 1 zeigt die Vorderansicht einer Arbeitsspindel 1, die Bestandteil einer nicht dargestellten Bearbeitungsmaschine, insbesondere einer Werkzeugmaschine ist. Die Arbeitsspindel 1 weist an ihrer Stirnseite eine oder mehrere ebene Auflageflächen 2 auf, an denen ein Werkzeug oder ein Werkzeugträger im gespannten Zustand plan aufliegen soll. Im Falle mehrerer separater Auflageflächen 2 liegen diese genau planparallel zueinander in einer einzigen Ebene. Zur Verwendung an der Arbeitsspindel 1 bestimmte Werkzeuge oder Werkzeugträger, wobei letztere ihrerseits verschiedene Werkzeuge aufnehmen können, weisen an ihrer Rückseite ebenfalls entsprechende stirnseitige Auflageflächen auf. Bei einer planen Anlage der werkzeugseitigen bzw. werkzeugträgerseitigen Auflageflächen an der spindelseitigen Auflagefläche 2 verläuft die Längsachse des Werkzeugs bzw. Werkzeugträgers genau parallel zur Längsachse der Arbeitsspindel 1. Die Zentrierung des Werkzeugs bzw. Werkzeugträgers bezüglich der Arbeitsspindel 1 erfolgt durch kegelförmige Auflageflächen im Inneren der Arbeitsspindel 1.

Im Fall einer Verschmutzung einer Auflagefläche 2 ist keine plane Anlage des Werkzeugs oder Werkzeugträgers an der Arbeitsspindel 1 mehr möglich. Insbesondere kann eine solche Verschmutzung durch bei der Bearbeitung eines Werkstücks anfallende Späne erfolgen. Schematisch ist eine solche Situation in Fig. 2 dargestellt. Auf dem rechten Teil der Auflagefläche 2 liegt ein Span 3, der beim Spannen des Werkzeugs 4 an der Arbeitsspindel 1 zwischen dieser und dem Werkzeug 4 eingeklemmt wird und dafür sorgt, dass ein keilförmiger Spalt zwischen beiden besteht. Bei der Bearbeitung eines Werkstücks mit einem solchermaßen schrägstehenden Werkzeug 4 ist kein maßhaltiges Ergebnis, sondern Ausschuss zu erwarten.

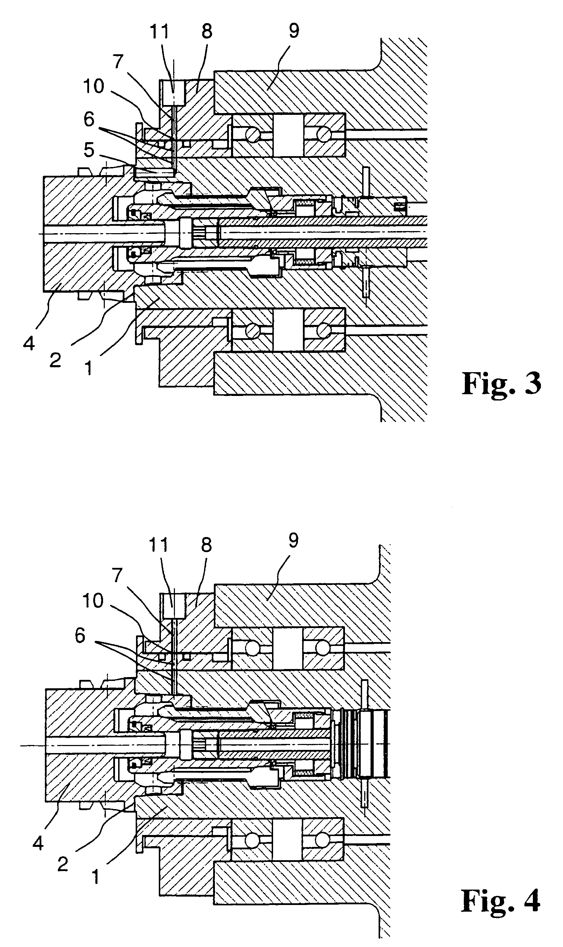

Erfindungsgemäß sind an der Auflagefläche 2 mehrere, im gezeigten Beispiel drei in Axialrichtung der Arbeitsspindel 1 verlaufende Bohrungen 5 vorgesehen, von denen in Fig. 1 jeweils der stirnseitige Austritt aus der Arbeitsspindel 1 sichtbar ist. In der zugehörigen Längsschnittansicht in Fig. 3 ist erkennbar, dass die obere der axialen Bohrungen 5 im Inneren der Arbeitsspindel 1 auf eine in Radialrichtung der Arbeitsspindel 1 verlaufende Bohrung 6 trifft. In gleicher Weise trifft auch jede der beiden anderen, in Fig. 3 nicht sichtbaren Axialbohrungen 5 jeweils auf eine zugeordnete Radialbohrung 6 in der Arbeitsspindel 1. In der gezeigten Winkelstellung der Arbeitsspindel 1 fluchtet die radiale Bohrung 6 in der Arbeitsspindel 1 mit einer radialen Bohrung 7 in einem Abschlussring 8 eines Stators 9, in welchem die Arbeitsspindel 1 gelagert ist. Zwischen den radialen Bohrungen 6 und 7 befindet sich ein dünner Luftspalt 10, der die rotierende Arbeitsspindel 1 von dem Stator 9 trennt.

In einem sich von außen in den Abschlussring 8 des Stators 9 erstreckenden Hohlraum ist ein Radarsystem 11, das einen Sender, einen Empfänger und eine Antenne umfasst, angeordnet. Die Antenne ist auf die Bohrung 7 in dem Abschlussring 8 ausgerichtet, um die Einstrahlung eines Radarsignals in die Bohrung 7 und den Empfang eines Radarsignals aus der Bohrung 7 zu ermöglichen. Die Bohrung 7 fungiert ebenso wie die Bohrungen 5 und 6 für eine in sie eingestrahlte elektromagnetische Welle als Hohlleiter. Dies ist aus der Radartechnik hinreichend bekannt.

Ein Hohlleiter ermöglicht die Führung einer elektromagnetischen Welle unter bestimmten geometrischen Randbedingungen. Eine einfache Bohrung innerhalb eines Metallkörpers wirkt dann als Hohlleiter, wenn die Wellenlänge der zu führenden elektromagnetischen Welle etwas kleiner als der zweifache Durchmesser der Bohrung ist. Exakt errechnet sich die Grenzwellenlänge $\lambda_C$ eines runden Hohlleiters mit dem Durchmesser D zu $\lambda_C = (\pi \cdot D)/1{,}841$. Befindet sich im Hohlleiter ein Dielektrikum mit der Permittivität $\varepsilon_r$, so erhöht sich die Grenzwellenlänge $\lambda_C$ um den Faktor $\sqrt{\varepsilon_r}$. Folglich beträgt die Grenzfrequenz eines runden Hohlleiters mit einem Durchmesser von 5mm mit Luft als Dielektrikum ca. 35,2 GHz und gefüllt mit einem Dielektrikum mit $\varepsilon_R = 4$ ca. 17,5 GHz. In einer Arbeitsspindel 1 lassen sich im Bereich der Werkzeuganlage aufgrund der mechanischen Randbedingungen Bohrungen mit einem Durchmesser in der Größenordnung bis zu 5mm realisieren. Daraus ergibt sich eine Hohlleiter-Grenzfrequenz in einem Bereich, der durch die als solche bekannte Technologie des Frequenzmodulierten Dauerstrichradars (FMCW-Radar) abgedeckt wird.

In der in Fig. 3 gezeigten Winkelposition besteht insgesamt ein als Hohlleiter wirksamer Kanal 5,6,7 zwischen dem Radarsystem 11 und der rückwärtigen Auflagefläche des Werkzeugs 4, mit dem dieses auf der Auflagefläche 2 der Arbeitsspindel 1 aufliegt. Ein von dem Radarsystem 11 in die Bohrung 7 eingestrahltes Radarsignal breitet sich über die Bohrung 7, die fluchtende Bohrung 6 und die Bohrung 5 bis zu der rückwärtigen Auflagefläche des Werkzeugs 4 aus, wobei es an dem Übergang von der Bohrung 6 zu der Bohrung 5 um 90° umgelenkt wird. Dabei führt der Kanal 5,6,7 die sich in ihm ausbreitende elektromagnetische Welle im Sinne eines Hohlleiters. An der rückwärtigen Auflagefläche des Werkzeugs 4 wird das Radarsignal reflektiert und läuft in dem Kanal 5,6,7 in entgegengesetzter Richtung bis zu dem Radarsystem 11 zurück, wo es empfangen und als elektrisches Signal zur weiteren Verarbeitung abgegeben wird.

Falls der Kanal 5,6,7 mit einem Dielektrikum gefüllt ist, ändert sich lediglich wie oben erwähnt die Grenzfrequenz, ab welcher der Kanal 5,6,7 als Hohlleiter wirksam ist. Es ist äußerst zweckmäßig, den Kanal 5,6,7 zumindest im Bereich der werkzeugseitigen Bohrung 5 mit einem Dielektrikum zu füllen, um ein Eindringen von Schmutz und Spänen, welches die Wellenausbreitung offensichtlich stören würde, zu verhindern. Zur Schaffung homogener Ausbreitungseigenschaften ist es jedoch bevorzugt, den gesamten Kanal 5,6,7 mit einem Dielektrikum zu füllen. Geeignet ist hierfür beispielsweise eine Vergussmasse auf Polyurethanbasis.

Eine alternative Ausführungsform einer erfindungsgemäßen Arbeitsspindel 1 zeigt Fig. 4. Im Gegensatz zu der Ausführungsform nach Fig. 3 ist hier keine Bohrung 5 in Axialrichtung der Arbeitsspindel 1 vorgesehen, sondern die in Radialrichtung verlaufende Bohrung 6 erstreckt sich in der Arbeitsspindel 1 bis zu einem stirnseitigen hohlkegelförmigen Hohlraum, in den im gespannten Zustand ein kegelstumpfförmiger Abschnitt des Werkzeugs 4 (oder ggf. eines Werkzeughalters) passgenau eingreift. Dies ist der einzige Unterschied gegenüber der ersten, in Fig. 3 dargestellten, Ausführungsform. Gleiche Komponenten sind daher in den Figuren 3 und 4 mit gleichen Bezugszahlen gekennzeichnet.

Die Neigung der Kegelmantelfläche des Werkzeugs 4 gegenüber der Axialrichtung der Arbeitsspindel 1 ist üblicherweise sehr gering und daher in Fig. 4 kaum erkennbar. Die geringfügige Schrägstellung des als Reflexionsfläche wirkenden Oberflächenabschnitts des Werkzeugs 4 wirkt sich daher kaum auf die Reflexion der einfallenden Welle aus. Um diese Schrägstellung der Reflexionsfläche zu vermeiden, kann der in die Arbeitsspindel 1 eingreifende Abschnitt des Werkzeugs 4 auf der Höhe der Bohrung 6 ein kurzes Stück lang zylindrisch geformt sein, oder es können die Bohrungen 6 und 7 unter einem entsprechenden Neigungswinkel zur Radialrichtung der Arbeitsspindel 1 verlaufen, so dass die Bohrung 6 senkrecht auf die Kegelmantelfläche des Werkzeugs 4 trifft. Die letztgenannte Variante hat den Vorteil, dass keine Modifikation an dem Werkzeug 4 erforderlich ist. Nötigenfalls kann die Antenne des Radarsystems 11 an den schrägen Verlauf der Bohrung 7 angepasst, d.h. ebenfalls etwas schräg ausgerichtet werden.

Der Vorteil der zweiten Ausführungsform nach Fig. 4 besteht in der einfacheren Herstellung wegen des Entfallens der axialen Bohrung 5 und in der Tatsache, dass keine Umlenkung der Wellenausbreitung um 90° nötig ist. Letztere ist nämlich mit einer unerwünschten Teilreflexion der eingestrahlten Welle bereits an der Umlenkstelle verbunden. Auch ist die geometrische Form der Umlenkstelle nicht frei wählbar, sondern durch die Spitzenform der zur Herstellung der Bohrungen 5 und 6 verwendeten Bohrer vorgegeben, so dass keine Optimierung der Umlenkstelle zur Minimierung der Teilreflexion möglich ist.

Zur Überwachung der Werkzeugplanlage müssen Abstandsmessungen an mehreren, d.h. mindestens drei vorzugsweise gleichmäßig über die Stirnfläche bzw. den Umfang der Arbeitsspindel 1 verteilt angeordneten Stellen durchgeführt und die Messwerte miteinander verglichen werden, um festzustellen, ob das Werkzeug 4 (oder ein Werkzeughalter) gerade gespannt oder entsprechend Fig. 2 verkippt ist. Letzteres äußert sich in unterschiedlichen Abständen der Reflexionsflächen von den werkzeugseitigen Enden der Bohrungen 5 bei der ersten bzw. der Bohrungen 6 bei der zweiten Ausführungsform.

Um Messungen an den verschiedenen Stellen gleichzeitig durchzuführen, werden entsprechend viele Radarsysteme 11, d.h. mindestens drei, benötigt,. In diesem Fall müssen nicht nur in der Arbeitsspindel 1 jeweils mehrere Bohrungen 5 und/oder Bohrungen 6 vorgesehen sein, sondern es müssen auch in dem Abschlussring 8 des Stators 9 entsprechend viele jeweils mit den Bohrungen 6 fluchtende Bohrungen 7 sowie Hohlräume zur Anordnung der Radarsysteme 11 vorgesehen sein. Die Maßgrößen für die Abstände des Werkzeugs 4 an den einzelnen Messstellen liegen in diesem Fall alle gleichzeitig vor und können zur Feststellung der Werkzeugplananlage sofort miteinander verglichen werden.

Grundsätzlich ist es aber auch möglich, nur ein einziges Radarsystem 11 zu verwenden. In diesem Fall genügt in dem Abschlussring 8 des Stators 9 eine einzige Bohrung 7, die in verschiedenen vorbestimmten Winkelpositionen der Arbeitsspindel 1 jeweils mit einer der in dieser vorhandenen Bohrungen 6 fluchtet. Die verschiedenen Abstandsmessungen müssen in diesem Fall sequentiell vorgenommen und Maßgrößen für die jeweiligen Abstände zwischengespeichert werden, damit nach der Durchführung der Messungen an allen einzelnen Messstellen ein Vergleich zur Feststellung der Werkzeugplananlage vorgenommen werden kann. Ein Vorteil der Verwendung eines einzigen Radarsystems 11 liegt darin, dass statistische Variationen der Eigenschaften mehrerer gleichartiger Radarsysteme 11 untereinander keine Messfehler verursachen können.

Um die Werkzeugplananlage auch während der Bearbeitung eines Werkstücks überwachen zu können, ist es zweckmäßig, die Winkelposition der Arbeitsspindel 1 zu erfassen, um bei bestimmten Winkelpositionen, nämlich genau dann, wenn die Radialbohrungen 6 in der Arbeitsspindel 1 annähernd mit den Radialbohrungen 5 in dem Abschlussring 8 des Stators 9 fluchten, bzw. im Fall der Verwendung nur eines einzigen Radarsystems 11 jeweils eine der Radialbohrungen 6 in der Arbeitsspindel 1 annähernd mit der einzigen Radialbohrung 5 in dem Abschlussring 8 des Stators 9 fluchtet, kurzzeitig eine Abstandsmessung durchzuführen. Es versteht sich, dass das für eine Messung verfügbare Zeitfenster umso kürzer ist, je höher die Drehgeschwindigkeit der Arbeitsspindel 1 ist.

Bei sehr hohen Drehgeschwindigkeiten der Arbeitsspindel 1 kann sich das verfügbare Zeitfenster so sehr verkürzen, dass die Abstandsmessung unmöglich wird. In diesem Fall kann die Plananlagenüberwachung nach einem Werkzeugwechsel vor dem Anfahren der Arbeitsspindel 1 erfolgen, indem die Arbeitsspindel 1 von der Anlagensteuerung zunächst in die zur Messung erforderliche Winkelposition gefahren und in dieser für die Messung angehalten wird. Falls nur ein einziges Radarsystem 11 verwendet wird, muss die Arbeitsspindel 1 nacheinander in mehrere Winkelpositionen gefahren werden, in denen jeweils eine Abstandsmessung durchgeführt wird. Es versteht sich, dass für eine solche Plananlagenüberwachung bei stehender Arbeitsspindel eine Absolutwertmessung der Winkelposition der Arbeitsspindel 1 unerlässlich ist.

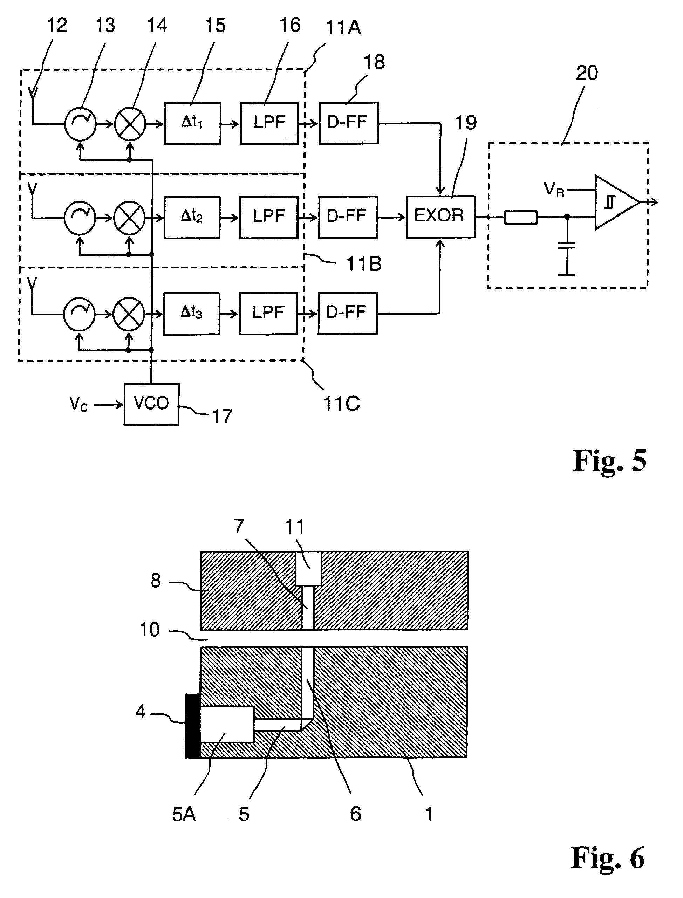

Bei der elektrischen Auswertung der Messsignale kommt es für die Plananlagenüberwachung nur auf die Gleichheit der an den verschiedenen Messstellen gemessenen Abstände des Werkzeugs 4 oder Werkzeugträgers von den werkzeugseitigen Enden der Bohrungen 5 bzw. 6 an. Es bedarf folglich nicht der exakten Bestimmung der Absolutwerte der Abstände. Eine Realisierungsmöglichkeit für eine vergleichende Messung der hier interessierenden Art zeigt Fig. 5 in Form eines Blockschaltbildes, wobei hier eine Variante zur gleichzeitigen Abstandsmessung mit drei verschiedenen Radarsystemen 11A, 11B und 11C zugrunde gelegt wurde.

Das Radarsystem 11A weist eine kombinierte Sende- und Empfangsantenne 12 auf, die an einen Zirkulator 13 angeschlossen ist. Der Zirkulator 13 ist mit einem Eingang eines Mischers 14 verbunden. Der Ausgang des Mischers 14 ist mit dem Eingang eines einstellbaren Verzögerungsgliedes 15 verbunden. Dessen Ausgang ist mit dem Eingang eines Tiefpassfilters 16 verbunden. Das Ausgangssignal des Tiefpassfilters 16 ist zugleich das Ausgangssignal des Radarsystems 11A. Ein dritter Anschluss des Zirkulators 13 sowie ein zweiter Eingang des Mischers 14 sind gemeinsam mit dem Ausgang eines spannungsgesteuerten Oszillators (VCO = Voltage Controlled Oscillator) 17 verbunden, dem zur Variation seiner Frequenz eine sägezahnförmige Steuerspannung $V_C$ zugeführt wird. Die drei Radarsysteme 11A, 11B und 11C sind identisch aufgebaut, weshalb ihre Komponenten hier nur anhand eines Systems 11A erläutert werden. An den VCO 17 sind parallel zu dem Zirkulator 13 und dem Mischer 14 des Systems 11A auch die Zirkulatoren und Mischer der beiden anderen Systeme 11B und 11C angeschlossen.

Durch den Zirkulator 13 wird das von dem VCO 17 abgegebene Signal als Sendesignal in die Antenne 12 eingespeist und das von der Antenne empfangene Reflexionssignal dem Mischer 14 zugeführt. Durch die dortige Multiplikation mit dem Sendesignal des VCO 17 und die Filterung durch das Tiefpassfilter 16 wird das empfangene Reflexionssignal demoduliert, wobei die Information über den interessierenden Abstand der Reflexionsfläche von der Antenne 12 in der Phasenlage des demodulierten Signals enthalten ist. Dies bedeutet, dass bei gleichem Abstand aller drei Reflexionsflächen von der jeweiligen Antenne alle drei Radarsysteme 11A, 11 B und 11C an ihrem Ausgang identische Signale liefern würden.

Durch unvermeidliche Abweichungen wie insbesondere Laufzeitunterschiede zwischen den drei Systemen 11A, 11B und 11C untereinander sowie den drei ebenfalls gleichartigen, aber separaten Hohlleiterkanälen 5,6,7 bzw. 6,7 untereinander wären die Phasenlagen der Ausgangssignale der drei Systeme 11A, 11B und 11C jedoch in der Praxis auch bei perfekter Plananlage des Werkzeugs 4 an der Arbeitsspindel 1 nicht gleich. Um diese Abweichungen ausgleichen zu können, ist bei dem System 11A das Verzögerungsglied 15 vorgesehen, dessen Verzögerungszeit einstellbar ist. Insgesamt drei einstellbare Verzögerungsglieder, d.h. eines in jedem der Systeme 11A, 11B und 11C, wie in Fig. 5 dargestellt, bieten mehr Freiheitsgrade, als es zum Ausgleich der Laufzeitunterschiede zwischen den Systemen 11A, 11B und 11C nötig ist. Es genügt daher, bei zwei der drei Verzögerungsglieder eine Verzögerungszeit einzustellen. Die Verzögerungszeit des dritten kann zu Null gewählt werden bzw. es könnte in einem der Radarsysteme 11A, 11B und 11C auf ein Verzögerungsglied verzichtet werden.

Die Signalverarbeitung zum Vergleich der drei gewonnenen Abstandsmesssignale besteht nach Fig. 5 in einer Digitalisierung jedes dieser Signale durch ein jeweiliges D-Flipflop 18, einer Verknüpfung der so digitalisierten Signale in einem EXOR-Gatter 19 und in einem abschließenden Vergleich der Ausgangsspannung der EXOR-Gatters mit einer einstellbaren Spannungsschwelle $V_R$ in einer Komparatorschaltung 20, deren Ausgangssignal schließlich anzeigt, ob die Plananlage des Werkzeugs 4 an der Arbeitsspindel 1 korrekt ist oder nicht. Während die Einstellung der Verzögerungsglieder auch im offenen Zustand, d.h. ohne eingespanntes Werkzeug erfolgen könnte, wird die Schwellenspannung $V_R$ in jedem Fall mit eingespanntem Werkzeug bei perfekt planer Anlage desselben an der Arbeitsspindel 1 eingestellt.

Eine weitere Ausführungsform der Erfindung, die von einer anderen Art der Abstandsmessung als über die Phasenlage eines reflektierten Radarsignals Gebrauch macht, zeigt Fig. 6, wobei die dortige Darstellung einem Ausschnitt aus dem linken oberen Bereich von Fig. 3 entspricht. Gleiche Komponenten sind daher in Fig. 6 mit gleichen Bezugszahlen wie in Fig. 3 bezeichnet. Im Unterschied zu der ersten Ausführungsform nach Fig. 3 wird in diesem Fall die Leistungsabgabe durch das Radarsystem 11 in den als Hohlleiter wirksamen Kanal 5,6,7 bzw. der Reflexionskoeffizient als Maß für den Abstand der Reflexionsfläche herangezogen.

Zur Vergrößerung der Empfindlichkeit ist es hierbei zweckmäßig, die Bohrung 5 so zu gestalten, dass eine möglichst ausgeprägte Resonanz auftritt, was in Fig. 6 durch die Erweiterung der Bohrung 5 an ihrem werkzeugseitigen Ende zu einer Kammer 5A schematisch dargestellt ist. Hierdurch kann ein Schwingkreis hoher Güte realisiert werden, dessen Resonanzfrequenz von der Lage der rückwärtigen Auflagefläche des Werkzeugs 4 bezüglich der Arbeitsspindel 1 abhängt. Es versteht sich, dass beim Entwurf dieses Schwingkreises außer den Bohrungen 5,6,7 und der Kammer 5A auch der Einfluss des zwischen dem Abschlussring 8 des Stators und der rotierenden Arbeitsspindel 1 vorhandenen Luftspalts 10, an dem die Bohrungen 6 und 7 miteinander fluchtend enden, berücksichtigt werden muss. Ein solcher Schwingkreis wird bereits bei einer geringfügigen Abweichung der Lage des Werkzeugs 4 von einer perfekten Plananlage an der Auflagefläche 2 der Arbeitsspindel 1 verstimmt, was leicht detektierbar ist.

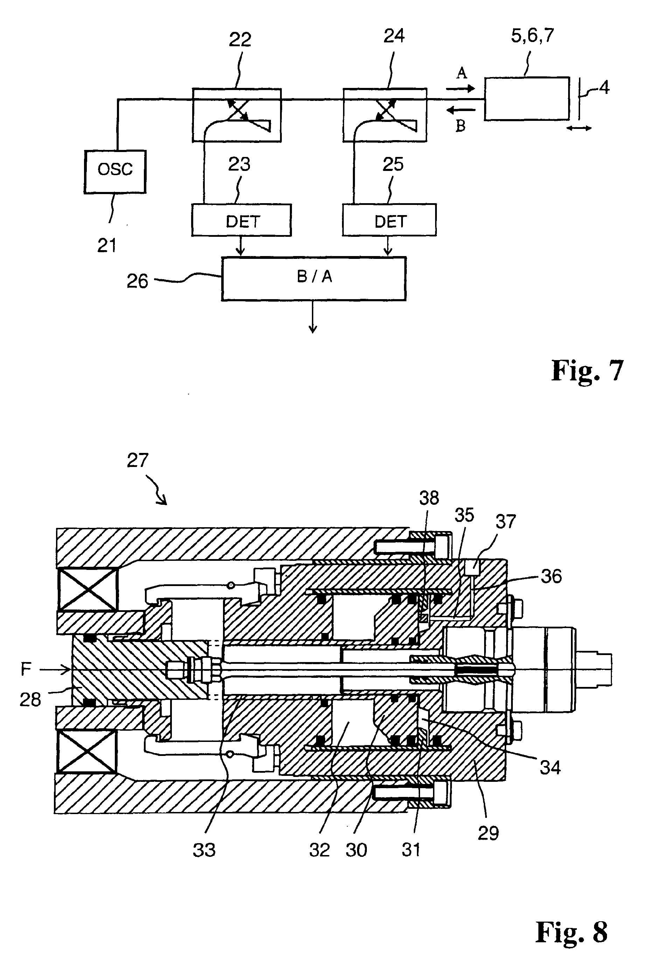

Eine hierzu geeignete Schaltungsanordnung zeigt Fig. 7. Zur Bestimmung des Reflexionskoeffizienten muss das Verhältnis der Leistung des reflektierten Signals zu derjenigen des abgestrahlten Signals gebildet werden. Ein definierter Anteil des von einem Oszillator 21 abgegebenen Signals wird durch einen ersten Richtkoppler 22 ausgekoppelt und einem ersten Detektor 23 zugeführt. Der restliche Teil A des von dem Oszillator abgegebenen Signals wird über eine in Fig. 7 nicht dargestellte Antenne in den als Hohlleiter wirksamen Kanal 5,6,7 eingestrahlt und an dessen Ende, d.h. am Ende der Kammer 5A, die den Abschluss der Bohrung 5 bildet, von dem Werkzeug 4 reflektiert. Ein definierter Teil des reflektierten Signals B wird durch einen zweiten Richtkoppler 24 ausgekoppelt und einem zweiten Detektor 25 zugeführt.

Die Detektoren 23 und 25 geben Messsignale ab, welche jeweilige Maße für die Leistungen des in den Kanal 5,6,7 eingestrahlten und des aus dem Kanal 5,6,7 reflektierten Signals darstellen. In einer Auswertungseinheit 26 wird das Verhältnis der beiden Messsignale gebildet, welches bei Resonanz einen Extremwert annimmt. Wie bei der zuvor beschriebenen Schaltung nach Fig. 5 muss auch hier eine Kalibrierung vorgenommen werden. In diesem Fall wird die Frequenz des Oszillators 21 bei perfekter Plananlage des Werkzeugs 4 an der Auflagefläche 2 der Arbeitsspindel 1 so eingestellt, dass Resonanz herrscht. Bei einer Lageabweichung des Werkzeugs 4 erfolgt eine starke Änderung des Verhältnisses der beiden Messsignale. Dieses Verhältnis wird durch einen in der Auswertungseinheit 26 enthaltenen Komparator mit einem einstellbaren Schwellwert verglichen. Die Über- bzw. Unterschreitung dieses Schwellwertes zeigt schließlich an, ob die Plananlage des Werkzeugs 4 an der Arbeitsspindel 1 korrekt ist oder nicht.

Obgleich in diesem Fall die Übereinstimmung der absoluten Position des Werkzeugs 4 mit einer Sollposition gemessen wird und daher eine einzige Messstelle bereits eine Aussage über die Korrektheit der Lage des Werkzeugs liefert, können zur Erhöhung der Zuverlässigkeit mehrere Messstellen vorgesehen werden. Dies bedeutet eine entsprechende Vervielfachung der kompletten in Fig. 7 dargestellten Schaltung sowie die zusätzliche Bereitstellung einer gemeinsamen Auswertungseinheit, welche die Ausgangssignale der einzelnen Auswertungseinheiten 26 empfängt und gemeinsam bewertet.

Die Anwendbarkeit der vorliegenden Erfindung beschränkt sich jedoch keineswegs auf die Überwachung der Werkzeugplananlage. Vielmehr können mit der Erfindung funktionsrelevante Positionen verschiedener Maschinenelemente einer Bearbeitungsmaschine gemessen und überwacht werden. Ein Beispiel hierfür zeigt Fig. 8. Dort ist ein Teil einer Werkzeugspannvorrichtung 27 zum Spannen eines Werkzeugs oder Werkzeugträgers an oder in einer Arbeitsspindel einer Bearbeitungsmaschine in der Spannstellung dargestellt. In dieser Stellung übt ein nicht gezeigtes Tellerfederpaket eine Kraft F auf eine verschiebbar gelagerte Zugstange 28, von der in Fig. 8 nur das der ebenfalls nicht gezeigten Werkzeugaufnahme abgewandte, hintere Ende zu sehen ist, aus und hält die Zugstange 28 in der in Fig. 8 gezeigten Position. Eine mechanische Kopplung zwischen der Zugstange 28 und den Spannzangensegmenten der Werkzeugaufnahme sorgt in dieser Stellung für die Spannung eines Werkzeugs oder Werkzeugträgers in der Werkzeugaufnahme.

Axial benachbart zu dem Ende der Zugstange 28 ist ein Hydraulikzylinder 29 mit einem ringförmigen Innenraum angeordnet, in dem ein ringförmiger Kolben 30, der sogenannte Werkzeuglösekolben 30, verschiebbar gelagert ist. Der Werkzeuglösekolben 30 befindet sich in der Spannstellung nach Fig. 8 am hinteren Ende seines Bewegungsbereiches und liegt mit seiner hinteren Stirnseite an einem Anschlag 31 an. Eine vordere Kammer 32 in dem Hydraulikzylinder 29 ist in diesem Fall mit einer unter Druck stehenden Flüssigkeit gefüllt und drückt den Werkzeuglösekolben 30 gegen den Anschlag 31. Der Werkzeuglösekolben 30 weist einen sich in Richtung der Zugstange 28 erstreckenden hohlzylinderförmigen Abschnitt 33 auf, der jedoch in dieser Stellung des Werkzeuglösekolbens 30 einen Abstand von dem hinteren Ende der Zugstange 28 hat.

Zum Lösen des Werkzeugs oder Werkzeugträgers wird der Werkzeuglösekolben 30 gegenüber der Spannstellung von Fig. 8 durch Füllung einer hinteren Kammer 34 in dem Hydraulikzylinder 29 mit einer unter Druck stehenden Flüssigkeit in axialer Richtung gegen die Zugstange 28 verschoben, so dass sich das vordere Ende des hohlzylindrischen Abschnitts 33 des Werkzeuglösekolbens 30 in Kontakt mit dem hinteren Ende der Zugstange 28 befindet und eine gegen die Kraft F des Tellerfedernpaketes gerichtete Gegenkraft auf die Zugstange 28 ausübt. Diese Bewegung des hohlzylindrischen Abschnitts 33 ist in Fig. 8 durch gestrichelte Linien angedeutet. Die Zugstange 28 wird hierdurch gegenüber der Spannstellung von Fig. 8 in axialer Richtung, und zwar in der Darstellung von Fig. 8 nach links in Richtung der Werkzeugaufnahme verschoben, wodurch die Spannzangensegmente das Werkzeug bzw. den Werkzeugträger freigeben und ein Werkzeugwechsel ermöglicht wird.

Da sich die Zugstange 28 im Betrieb der Arbeitsspindel dreht, der Werkzeuglösekolben 30 jedoch stillsteht, ist es von Interesse, die Position des Werkzeuglösekolbens 30 zu überwachen, insbesondere festzustellen, ob er sich in der Endposition nach Fig. 8 und somit in einem Abstand von der Zugstange 28 befindet oder nicht. Das Erreichen besagter Endposition durch den Werkzeuglösekolben 30 ist ein sicheres Indiz für das Vorliegen des Spannzustandes, in dem die Arbeitsspindel nach einem Werkzeugwechsel wieder angefahren werden kann.

Erfindungsgemäß ist in dem Hydraulikzylinder 29 ein Kanal vorgesehen, der sich aus einer in axialer Richtung verlaufenden Bohrung 35 und einer in radialer Richtung verlaufenden Bohrung 36 zusammensetzt. Die Bohrung 36 endet in einem Hohlraum, der an der Außenseite des Hydraulikzylinders 29 ausgebildet ist. Die Bohrungen 35 und 36 entsprechen in Ihrer Funktion den Bohrungen 5 und 6 der in den Figuren 3 und 4 gezeigten Ausführungsbeispiele, d.h. sie wirken als Hohlleiter für ein Radarsignal, das von einem in dem Hohlraum an der Außenseite des Hydraulikzylinders 29 eingebauten Radarsystem 37 eingestrahlt und an der Rückseite des Werkzeuglösekolbens 30 reflektiert wird. Um einen Druckaufbau in der Kammer 34 zu ermöglichen, ist der Kanal 35,36 zumindest im Bereich der Bohrung 35, vorzugsweise aber vollständig mit einem Dielektrikum gefüllt.

Um eine Reflexionsfläche möglichst nahe am Ende der Bohrung 35 zu schaffen, erstreckt sich von der Rückseite des Werkzeuglösekolbens 30 aus in dem der Bohrung 35 gegenüberliegenden Bereich ein Vorsprung 38 in Richtung der Bohrung 35. Dieser Vorsprung 38 überdeckt die Bohrung 35 mit einer senkrecht zur Achse der Bohrung 35 liegenden Oberfläche, die in der gezeigten Stellung des Werkzeuglösekolbens 30 nur einen sehr geringen Abstand vom Ende der Bohrung 35 hat oder unmittelbar auf dem Hydraulikzylinder aufliegt. Im letztgenannten Fall begrenzt der Kontakt des Vorsprungs 38 mit dem Hydraulikzylinder 29 die Bewegung des Werkzeuglösekolbens 30 nach hinten und ersetzt den Anschlag 31, der dann nicht mehr benötigt wird. Der Vorsprung 38 sollte dann allerdings in Bezug auf die Achse des Werkzeuglösekolbens 30 eine radialsymmetrische Form haben, um bei der rückscitigen Abstützung des Werkzeuglösekolbens 30 eine radialsymmetrische Kraftverteilung zu gewährleisten.

Es leuchtet ein, dass mittels Einstrahlung eines Radarsignals in den Kanal 35, 36 und Messung des an dem Vorsprung 38 reflektierten Signals die Position des Werkzeuglösekolbens 30 gemessen und insbesondere festgestellt werden kann, ob er sich in der in Fig. 8 gezeigten hinteren Endposition, die der Spannstellung der Werkzeugspannvorrichtung entspricht, befindet, oder nicht. In dieser Anwendung der Erfindung ist der Unterschied zwischen den Positionen der Reflexionsfläche in den beiden Endpositionen des Werkzeuglösekolbens 30, d.h. in der in Fig. 8 gezeigten hinteren Endposition und in der vorderen Endposition, die der Lösestellung der Werkzeugspannvorrichtung entspricht, wesentlich größer als bei der zuvor beschriebenen Überwachung der Werkzeugplananlage, bei der eine minimale Verkippung des Werkzeugs erkannt werden muss. Die Genauigkeitsanforderungen an die Radar-Abstandsmessung sind daher in diesem Anwendungsfall wesentlich geringer.

Als Messmethode kommt auch hier sowohl eine Phasenmessung, wie sie der Schaltung nach Fig. 5 zugrunde liegt, als auch eine Messung des Reflexionskoeffizienten entsprechend der Schaltung nach Fig. 7 in Frage. Gegenüber der Schaltung nach Fig. 5 entfällt allerdings der dort vorgesehene Vergleich zwischen den Signalen mehrerer Messstellen. Für die Messung des Reflexionskoeffizienten kann auch hier analog zu der Ausführungsform nach Fig. 6 das Ende der Bohrung 35 zu einer Kammer geeigneter Form erweitert sein, um einen Hohlleiter-Resonator auszubilden und einen in Resonanz betriebenen Schwingkreis zu schaffen, der bei einer Entfernung des Werkzeuglösekolbens 30 von seiner hinteren Endposition verstimmt wird.

Aus der vorausgehenden Beschreibung ergeben sich für einen Fachmann verschiedene Möglichkeiten für Abwandlungen der Erfindung. So ist der Werkzeuglösekolben 30 nicht das einzige Maschinenelement im Umfeld einer Arbeitsspindel 1 oder einer Werkzeugspannvorrichtung 27, dessen Position unter Anwendung der vorliegenden Erfindung überwacht werden kann. Beispielsweise könnte auch die Position der Spannstange 28 überwacht werden, wozu ein als Hohlleiter wirksamer Kanal und ein Radarsystem an einer geeigneten anderen Stelle vorgesehen werden könnte. Auch muss nicht unbedingt eine der Bohrungen in radialer Richtung bezüglich der Achse der Arbeitsspindel 1 bzw. der Werkzeugspannvorrichtung 27 verlaufen, sondern es könnte je nach den durch die mechanischen Funktionen gegebenen Formen der Elemente, durch die das Radarsignal hindurchgeführt werden muss, unter Umständen auch eine Bohrung in rein axialer Richtung ausreichen. Auch spielt es für die Anwendung der Erfindung zur Überwachung der Werkzeugplananlage keine Rolle, ob das Objekt, dessen Position gemessen wird, das Werkzeug selbst oder ein seinerseits zur Aufnahme eines Werkzeugs bestimmter Werkzeughalter ist. Ebenso spielt es für die Anwendung der Erfindung zur Überwachung des Spannzustandes des Werkzeugs keine Rolle, ob die Bewegung der Spannstange 28 wie in Fig. 8 gezeigt hydraulisch oder etwa pneumatisch oder elektromotorisch angetrieben wird. Solche und vergleichbare Modifikationen der Erfindung sollen vom Schutz der Ansprüche umfasst sein.

**Patentansprüche**

1. Vorrichtung zur Überwachung der Lage eines Werkzeugs (4) oder Maschinenelementes (30) an oder in einer Arbeitsspindel (1) oder Werkzeugspannvorrichtung (27), insbesondere in einer Bearbeitungsmaschine, **dadurch gekennzeichnet, dass** die Arbeitsspindel (1) oder Werkzeugspannvorrichtung (27) mindestens einen Kanal (5,6,7; 35,36) aufweist, der einen von einer äußeren Oberfläche der Arbeitsspindel (1) oder Werkzeugspannvorrichtung (27) zu dem Werkzeug (4) oder Maschinenelement (30) führenden, zur Ausbreitung elektromagnetischer Wellen geeigneten Hohlleiter definiert, und dass mindestens ein Radarsystem (11; 37) vorgesehen und außerhalb der Arbeitsspindel (1) bzw. Werkzeugspannvorrichtung (27) so angeordnet ist, dass es dazu in der Lage ist, ein Radarsignal von der äußeren Oberfläche her in den Kanal (5,6,7; 35,36) einzustrahlen und ein aus dem Kanal (5,6,7; 35,36) zurückreflektiertes Radarsignal zu empfangen, und dass das Radarsystem (11; 37) mit einer Signalverarbeitungseinrichtung (18,19,20; 26) verbunden ist, die anhand mindestens eines in den Kanal (5,6,7; 35,36) eingestrahlten und aus dem Kanal (5,6,7; 35,36) reflektierten Radarsignals ein Maß für die Lage des Werkzeugs (4) oder Maschinenelementes (30) in Bezug auf die Arbeitsspindel (1) oder Werkzeugspannvorrichtung (27) ermittelt.

2. Vorrichtung nach Anspruch 1, **dadurch gekennzeichnet, dass** das Radarsystem (11) in mindestens einer vorbestimmten Winkelstellung der Arbeitsspindel (1) zur Einstrahlung eines Radarsignals und zum Empfang eines reflektierten Radarsignals in der Lage ist.

3. Vorrichtung nach Anspruch 1 oder 2, **dadurch gekennzeichnet, dass** die Arbeitsspindel (1) eine Vielzahl von Kanälen (5,6,7) aufweist, die jeweils an einer Fläche (2) enden, an welcher sich die Arbeitsspindel (1) bei korrekter Werkzeugspannung mit dem Werkzeug (4) oder einem Werkzeugträger in Kontakt befindet, und dass die Signalverarbeitungseinrichtung (18, 19, 20) ein Maß für die Lage des Werkzeugs (4) oder Werkzeugträgers bezüglich der Fläche (2) anhand eines Vergleichs der aus den verschiedenen Kanälen (5,6,7) reflektierten Radarsignale oder davon abgeleiteter Signale ermittelt.

4. Vorrichtung nach Anspruch 3, **dadurch gekennzeichnet, dass** mindestens drei Kanäle (5,6,7) räumlich über die Stirnseite und/oder über den Umfang der Arbeitsspindel (1) verteilt angeordnet sind.

5. Vorrichtung nach Anspruch 3 oder 4, **dadurch gekennzeichnet, dass** mehrere gleichartige Radarsysteme (11A, 11B, 11C) vorgesehen und so angeordnet sind, dass zumindest in einer vorbestimmten Winkelposition der Arbeitsspindel (1) an mehreren Kanälen (5,6,7) gleichzeitig Radarsignale einstrahlbar und reflektierte Radarsignale empfangbar sind.

6. Vorrichtung nach Anspruch 3 oder 4, **dadurch gekennzeichnet, dass** nur ein einziges Radarsystem (11) vorgesehen ist, das so angeordnet ist, dass an verschiedenen der Kanäle (5,6,7) nacheinander in verschiedenen vorbestimmten Winkelpositionen der Arbeitsspindel (1) Radarsignale einstrahlbar und reflektierte Radarsignale empfangbar sind, dass die Signalverarbeitungseinrichtung (18,19,20; 26) einen Speicher aufweist, in dem empfangene reflektierte Radarsignale oder davon abgeleitete Signale gespeichert werden, und dass der Vergleich der aus den verschiedenen Kanälen (5,6,7) reflektierten Radarsignale oder davon abgeleiteten Signale unter Verwendung von in dem Speicher gespeicherter Signale erfolgt.

7. Vorrichtung nach einem der Ansprüche 2 bis 6, **dadurch gekennzeichnet, dass** die Signalverarbeitungseinrichtung (18,19,20; 26) mit einer Messeinrichtung verbunden ist, welche ein die Winkelstellung der Arbeitsspindel (1) anzeigendes Signal abgibt, und dass die Signalverarbeitungseinrichtung (18,19,20; 26) das Maß für die Lage des Werkzeugs (4) in Bezug auf die Arbeitsspindel (1) dann ermittelt, wenn dieses Signal das Vorliegen der vorbestimmten Winkelposition anzeigt.

8. Vorrichtung nach einem der Ansprüche 2 bis 7, **dadurch gekennzeichnet, dass** der mindestens eine Kanal (5,6,7) mindestens einen Abschnitt (7) in einem feststehenden Maschinenelement (8) und mindestens einen Abschnitt (6, 7) in der rotierenden Arbeitsspindel (1) umfasst, die zumindest in einer vorbestimmten Winkelstellung der Arbeitsspindel (1) miteinander fluchten.

9. Vorrichtung nach einem der Ansprüche 1 bis 8, **dadurch gekennzeichnet, dass** der mindestens eine Kanal (5,6,7; 35, 36) von demjenigen Ende ausgehend, von welchem sich das reflektierte Radarsignal in den Kanal (5,6,7; 35,36) ausbreitet, zumindest entlang eines Teils seiner Länge mit einem Dielektrikum gefüllt ist.

10. Vorrichtung nach einem der Ansprüche 1 bis 9, **dadurch gekennzeichnet, dass** der mindestens eine Kanal (5,6,7; 35,36) aus mindestens zwei Bohrungen (5, 6; 35; 36) verschiedener Richtungen besteht, von denen mindestens eine Bohrung (6; 36) eine radiale Richtungskomponente bezüglich der Achse der Arbeitsspindel (1) oder der Werkzeugaufnahme (27) aufweist

11. Vorrichtung nach einem der Ansprüche 1 bis 10, **dadurch gekennzeichnet, dass** die Phasenlage des Ausgangssignals des mindestens einen Radarsystems (11) von der Entfernung einer Oberfläche des Werkzeugs (4) oder Maschinenelementes (30) von der Antenne (12) des Radarsystems (11) abhängt.

12. Vorrichtung nach Anspruch 11, **dadurch gekennzeichnet, dass** mehrere gleichartige Radarsysteme (11A, 11B, 11C) vorgesehen sind, deren Ausgänge jeweils mit dem Eingang eines D-Flipflöps (18) verbunden sind, dass die Ausgänge der D-Flipflops (18) mit den Eingängen eines EXOR-Gatters (19) verbunden sind und dass der Ausgang des EXOR-Gatters (19) mit dem Eingang einer Komparatorschaltung (20) verbunden sind.

13. Vorrichtung nach einem der Ansprüche 1 bis 10, **dadurch gekennzeichnet, dass** der Kanal (5,6,7; 35,36) als Hohlleiter-Resonator ausgelegt ist, dessen Resonanzfrequenz vom Abstand einer Oberfläche des Werkzeugs (4) oder Maschinenelementes (30) von seinem Ende abhängt.

14. Vorrichtung nach Anspruch 13, **dadurch gekennzeichnet, dass** eine Einrichtung zur Ermittlung und Auswertung des bei Einstrahlung eines Radarsignals in den Kanal (5,6,7; 35,36) auftretenden Reflexionskoeffizienten vorgesehen ist, die zwei Richtkoppler (22, 24) zur Auskopplung je eines definierten Anteils des eingestrahlten und des reflektierten Radarsignals, zwei jeweils mit einem der Richtkoppler (22, 24) verbundene Detektoren (23, 25) zur Messung der Leistungen der beiden ausgekoppelten Signalanteile und eine mit den Ausgängen der beiden Detektoren (23, 25) verbundene Signalverarbeitungseinrichtung (26) umfasst, welche den Reflexionskoeffizienten aus den Ausgangssignalen der beiden Detektoren (23, 25) bestimmt und mit einem Schwellwert vergleicht.

15. Vorrichtung nach einem der Ansprüche 1 bis 14, **dadurch gekennzeichnet, dass** das Maschinenelement (30) ein Betätigungsglied ist, dessen Bewegung das Lösen oder Spannen des Werkzeugs (4) oder eines Werkzeughalters in einer Werkzeugaufnahme bewirkt.

**Claims**

1. Device for monitoring the position of a tool (4) or machine element (30) on or in a work spindle (1) or tool clamping device (27), in particular in a machine tool, **characterised in that** the work spindle (1) or tool clamping device (27) exhibits at least one channel (5, 6, 7; 35, 36) which defines a wave guide suitable for propagating electromagnetic waves and leading from an outer surface of the work spindle (1) or tool clamping device (27) to the tool (4) or machine element (30), and **in that** at least one radar system (11; 37) is provided and arranged outside the work spindle (1) or tool clamping device (27) so that it is capable of emitting a radar signal from the outer surface into the channel (5, 6, 7; 35, 36) and receiving a radar signal reflected back out of the channel (5, 6, 7; 35, 36), and **in that** the radar system (11; 37) is connected to a signal processing apparatus (18, 19, 20; 26) which determines a measurement for the position of the tool (4) or machine element (30) in relation to the work spindle (1) or tool clamping device (27) from at least one radar signal which is emitted into the channel (5, 6, 7; 35, 36) and reflected out of the channel (5, 6, 7; 35, 36).

2. Device according to claim 1, **characterised in that** the radar system (11) is capable of emitting a radar signal and receiving a reflected radar signal in at least one predetermined angular position of the work spindle (1).

3. Device according to claim 1 or 2, **characterised in that** the work spindle (1) exhibits a plurality of channels (5, 6, 7) each of which ends at a face (2) at which the work spindle (1) is in contact with the tool (4) or a tool carrier when the tool is clamped correctly, and **in that** the signal processing apparatus (18, 19, 20) determines a measurement for the position of the tool (4) or tool carrier in relation to the face (2) by comparison of the radar signals reflected from the different channels (5, 6, 7) or signals derived therefrom.

4. Device according to claim 3, **characterised in that** at least three channels (5, 6, 7) are arranged spatially distributed over the front end and/or over the circumference of the work spindle (1).

5. Device according to claim 3 or 4, **characterised in that** a plurality of radar systems (11A, 11B, 11C) of the same type are provided and arranged so that radar signals can be emitted and reflected radar signals can be received at the same time at a plurality of channels (5, 6, 7) at least in one predetermined angular position of the work spindle (1).

6. Device according to claim 3 or 4, **characterised in that** only one single radar system (11) is provided which is arranged so that radar signals can be emitted and reflected radar signals can be received at various of the channels (5, 6, 7) in succession in different predetermined angular positions of the work spindle (1), **in that** the signal processing apparatus (18, 19, 20; 26) exhibits a memory in which received reflected radar signals or signals derived therefrom are stored, and **in that** the comparison of the radar signals reflected from the different channels (5, 6, 7) or signals derived therefrom is carried out using signals stored in the memory.

7. Device according to one of claims 2 to 6, **characterised in that** the signal processing apparatus (18, 19, 20; 26) is connected to a measuring apparatus which emits a signal indicating the angular position of the work spindle (1), and **in that** the signal processing apparatus (18, 19, 20; 26) determines the measurement for the position of the tool (4) in relation to the work spindle (1) when this signal indicates the presence of the predetermined angular position.

8. Device according to one of claims 2 to 7, **characterised in that** the at least one channel (5, 6, 7) comprises at least one portion (7) in a stationary machine element (8) and at least one portion (6, 7) in the rotating work spindle (1) which are aligned with one another at least in one predetermined angular position of the work spindle (1).

9. Device according to one of claims 1 to 8, **characterised in that** the at least one channel (5, 6, 7; 35, 36) starting from the end from which the reflected radar signal is propagated into the channel (5, 6, 7; 35, 36) is filled with a dielectric at least along a part of its length.

10. Device according to one of claims 1 to 9, **characterised in that** the at least one channel (5, 6, 7; 35, 36) consists of at least two bores (5, 6; 35; 36) in different directions, of which at least one bore (6; 36) exhibits a radial directional component with respect to the axis of the work spindle (1) or the tool fixture (27).

11. Device according to one of claims 1 to 10, **characterised in that** the phase position of the output signal of the at least one radar system (11) is dependent on the distance of a surface of the tool (4) or machine element (30) from the antenna (12) of the radar system (11).

12. Device according to claim 11, **characterised in that** a plurality of radar systems (11A, 11B, 11C) of the same type are provided, the outputs of which are each connected to the input of a D flipflop (18), **in that** the outputs of the D flipflops (18) are connected to the inputs of an EXOR gate (19) and **in that** the output of the EXOR gate (19) is connected to the input of a comparator circuit (20).

13. Device according to one of claims 1 to 10, **characterised in that** the channel (5, 6, 7; 35, 36) is embodied as a wave guide resonator the resonance frequency of which depends on the distance of a surface of the tool (4) or machine element (30) from its end.

14. Device according to claim 13, **characterised in that** an apparatus is provided for determining and evaluating the coefficient of reflection occurring when a radar signal is emitted into the channel (5, 6, 7; 35, 36), which apparatus comprises two directional couplers (22, 24) each for outputting a defined part of the emitted and the reflected radar signal, two detectors (23, 25) connected in each case to one of the directional couplers (22, 24) for measuring the power of the two outputted signal parts and a signal processing apparatus (26) connected to the outputs of the two detectors (23, 25) which determines the coefficient of reflection from the output signals of the two detectors (23, 25) and compares it with a threshold value.

15. Device according to one of claims 1 to 14, **charac-**

**terised in that** the machine element (30) is an actuating member the movement of which produces the release or clamping of the tool (4) or a tool holder in a tool fixture.

**Revendications**

1. Dispositif de surveillance de la position d'un outil (4) ou d'un élément de machine (30) sur ou dans une broche de travail (1) ou un dispositif de serrage d'outil (27), en particulier dans une machine d'usinage, **caractérisé en ce que** la broche de travail (1) ou le dispositif de serrage d'outil (27) présente au moins un canal (5, 6, 7 ; 35, 36) qui définit un guide d'ondes conduisant d'une surface extérieure de la broche de travail (1) ou du dispositif de serrage d'outil (27) à l'outil (4) ou à l'élément de machine (30), approprié à la propagation d'ondes électromagnétiques, et qu'au moins un système radar (11 ; 37) est prévu et disposé à l'extérieur de la broche de travail (1) ou du dispositif de serrage d'outil (27) de façon à être en mesure d'émettre un signal radar dans le canal (5, 6, 7 ; 35, 36) depuis la surface extérieure et de recevoir un signal radar réfléchi depuis le canal (5, 6, 7 ; 35, 36), et que le système radar (11 ; 37) est relié à un dispositif de traitement de signaux (18, 19, 20 ; 26) qui détermine une mesure de la position de l'outil (4) ou de l'élément de machine (30) par rapport à la broche de travail (1) ou au dispositif de serrage d'outil (27) à partir d'au moins un signal radar émis dans le canal (5, 6, 7 ; 35, 36) et réfléchi depuis le canal (5, 6, 7 ; 35, 36).

2. Dispositif selon la revendication 1, **caractérisé en ce que** le système radar (11) est en mesure d'émettre un signal radar et de recevoir un signal radar réfléchi dans au moins une position angulaire prédéterminée de la broche de travail (1).

3. Dispositif selon la revendication 1 ou 2, **caractérisé en ce que** la broche de travail (1) présente une pluralité de canaux (5, 6, 7) qui se terminent chaque fois au niveau d'une surface (2) sur laquelle la broche de travail (1) se trouve en contact avec l'outil (4) ou un porte-outil en cas de serrage correct de l'outil, et que le dispositif de traitement de signaux (18, 19, 20) détermine une mesure de la position de l'outil (4) ou du porte-outil par rapport à la surface (2) à l'aide d'une comparaison des signaux radar réfléchis depuis les différents canaux (5, 6, 7) ou de signaux dérivés de ceux-ci.

4. Dispositif selon la revendication 3, **caractérisé en ce qu'**au moins trois canaux (5, 6, 7) sont répartis spatialement sur la face frontale et/ou sur le pourtour de la broche de travail (1).

5. Dispositif selon la revendication 3 ou 4, **caractérisé en ce que** plusieurs systèmes radars (11A, 11B, 11C) de même type sont prévus et disposés de façon que des signaux radar puissent être émis et des signaux radar réfléchis reçus en même temps sur plusieurs canaux (5, 6, 7) au moins dans une position angulaire prédéterminée de la broche de travail (1).

6. Dispositif selon la revendication 3 ou 4, **caractérisé en ce qu'**un seul système radar (11) est prévu, qui est disposé de façon que des signaux radar puissent être émis et des signaux radar réfléchis reçus successivement sur les différents canaux (5, 6, 7) dans différentes positions angulaires prédéterminées de la broche de travail (1), que le dispositif de traitement de signaux (18, 19, 20 ; 26) présente une mémoire dans laquelle des signaux radar réfléchis reçus ou des signaux dérivés de ceux-ci sont enregistrés, et que la comparaison des signaux radar réfléchis depuis les différents canaux (5, 6, 7) ou de signaux dérivés de ceux-ci est effectuée en utilisant des signaux enregistrés dans la mémoire.

7. Dispositif selon une des revendications 2 à 6, **caractérisé en ce que** le dispositif de traitement de signaux (18, 19, 20 ; 26) est relié à un dispositif de mesure qui délivre un signal qui indique la position angulaire de la broche de travail (1), et que le dispositif de traitement de signaux (18, 19, 20 ; 26) détermine la mesure de la position de l'outil (4) par rapport à la broche de travail (1) quand ce signal indique la présence de la position angulaire prédéterminée.

8. Dispositif selon une des revendications 2 à 7, **caractérisé en ce que** ledit au moins un canal (5, 6, 7) comprend au moins une portion (7) dans un élément de machine fixe (8) et au moins une portion (6, 7) dans la broche de travail (1) en rotation, lesquelles sont alignées au moins dans une position angulaire prédéterminée de la broche de travail (1).

9. Dispositif selon une des revendications 1 à 8, **caractérisé en ce que** ledit au moins un canal (5, 6, 7 ; 35, 36) est rempli avec un diélectrique sur au moins une partie de sa longueur à partir de l'extrémité depuis laquelle le signal radar réfléchi se propage dans le canal (5, 6, 7 ; 35, 36).

10. Dispositif selon une des revendications 1 à 9, **caractérisé en ce que** ledit au moins un canal (5, 6, 7 ; 35, 36) se compose d'au moins deux perçages (5, 6 ; 35 ; 36) de directions différentes, dont au moins un perçage (6 ; 36) présente une composante de direction radiale par rapport à l'axe de la broche de travail (1) ou du raccord d'outil (27).

11. Dispositif selon une des revendications 1 à 10, **ca-**

**ractérisé en ce que** la position de phase du signal de sortie dudit au moins un système radar (11) dépend de la distance d'une surface de l'outil (4) ou de l'élément de machine (30) à l'antenne (12) du système radar (11).

12. Dispositif selon la revendication 11, **caractérisé en ce que** plusieurs systèmes radar (11A, 11B, 11C) de même type sont prévus, dont les sorties sont chaque fois reliées à l'entrée d'une bascule D (18), que les sorties de la bascule D (18) sont reliées aux entrées d'une porte EXOR (19) et que la sortie de la porte EXOR (19) est reliée à l'entrée d'un circuit comparateur (20).

13. Dispositif selon une des revendications 1 à 10, **caractérisé en ce que** le canal (5, 6, 7 ; 35, 36) est conçu comme un résonateur à guide d'ondes dont la fréquence de résonance dépend de la distance d'une surface de l'outil (4) ou de l'élément de machine (30) à son extrémité.

14. Dispositif selon la revendication 13, **caractérisé en ce qu'**il est prévu un dispositif de détermination et d'évaluation du coefficient de réflexion obtenu lors de l'émission d'un signal radar dans le canal (5, 6, 7 ; 35, 36), qui comprend deux coupleurs directifs (22, 24) pour découpler chacun une part définie du signal radar émis et du signal radar réfléchi, deux détecteurs (23, 25) reliés chacun à un des coupleurs directifs (22, 24) pour mesurer les puissances des deux parts de signal découplées et un dispositif de traitement de signaux (26) relié aux sorties des deux détecteurs (23, 25), lequel détermine le coefficient de réflexion à partir des signaux de sortie des deux détecteurs (23, 25) et le compare avec une valeur seuil.

15. Dispositif selon une des revendications 1 à 14, **caractérisé en ce que** l'élément de machine (30) est un organe d'actionnement dont le mouvement provoque le desserrage ou le serrage de l'outil (4) ou d'un porte-outil dans un raccord d'outil.

Fig. 1

Fig. 2

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10351347 A1
- DE 19959778 A1
- DE 19903183 A1